(19) **Europäisches Patentamt**

**European Patent Office**

**Office européen des brevets**

(11) **EP 1 489 557 A2**

(12) **EUROPÄISCHE PATENTANMELDUNG**

(43) Veröffentlichungstag:
**22.12.2004 Patentblatt 2004/52**

(51) Int Cl.⁷: **G06T 5/00**

(21) Anmeldenummer: **04013431.4**

(22) Anmeldetag: **08.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **10.06.2003 DE 10326031**

(71) Anmelder: **hema electronic GmbH**
**73431 Aalen (DE)**

(72) Erfinder: **Louban, Roman, Dr.-Ing.**
**74564 Crailsheim (DE)**

(54) **Verfahren zur adaptiven Kantenerkennung**

(57)  Die Erfindung betrifft ein Verfahren zur Erkennung einer Kante **3** unter Berücksichtigung lokaler Helligkeitsverhältnisse, die auf einem mit einem Kamerasensor aufgenommenen Bild in einem Testbereich **4** entlang einer Suchlinie **5** gesucht wird.

Erfindungsgemäß sollen das Histogramm aus dem Testbereich **4** und das Grauwertprofil entlang der Suchlinie **5** zusammen als Ausgangsdaten für die Kantenerkennung benutzt werden, aus denen die notwendigen Parameter - die kantenspezifische minimale Helligkeit $I_0$ und die kantenspezifische minimale Helligkeitssteigung $\Delta I_0$ sowie die Länge der Teststrecke $L_0$ - adaptiv zu lokalen Helligkeitsbedingungen dynamisch ermittelt werden.

Auf der Teststrecke $L_0$, die entlang der Suchlinie **5** verschoben werden soll, werden folgende Bedingungen überprüft:

$$I_{max} \geq I_0;$$
$$\Delta I \geq \Delta I_0,$$

wobei: $\Delta I$ - die lokale Helligkeitssteigung innerhalb der Teststrecke $L_0$

$$\Delta I = I_{max} - I_{min};$$

$I_{max}$ - die lokale maximale Helligkeit innerhalb der Teststrecke $L_0$;

$I_{min}$ - die lokale minimale Helligkeit innerhalb der Teststrecke $L_0$.

Eine Kante **3** ist dann im Testbereich **4** vorhanden, wenn beide Bedingungen gleichzeitig erfüllt sind.

EP 1 489 557 A2

**Beschreibung**

Die Erfindung betrifft ein Verfahren gemäß dem Oberbegriff des Anspruchs 1.

Insbesondere bezieht sich die Erfindung auf die Erkennung einer Kante auf einem Licht- und-Schatten-Bild, das mittels eines Bildverarbeitungssystems gewonnen wird, unabhängig von den Beleuchtungsbedingungen (z.B. unterschiedliche lokale Helligkeit an der Kante wie beim Holz), der Schärfe der Kantenabbildung (z.B. eine schräge Kante) und der Komplexität der Kante (z.B. doppelte Kante wie beim Holzbrett mit Rinde).

Die Erkennung einer Kante ist eine notwendige Voraussetzung für alle Verfahren, die eine Detektierung, eine Vermessung oder eine Be- bzw. Verarbeitung eines Objektes beinhalten. Die Kantenerkennung bestimmt die Verwendung jedes dieser Verfahren und ist daher von erheblicher wirtschaftlicher Bedeutung.

In der industriellen Bildverarbeitung kommt normalerweise ein ganzer Komplex der obengenannten Verfahren vor. Dabei geht es sowohl um die Feststellung, ob eine Kante überhaupt vorhanden ist, als auch um die genaue Lokalisierung der gesuchten Kante, deren Existenz bereits bekannt ist.

Es ist Stand der Technik, dass man für die generelle Kantensuche eine Umwandlung des gesamten Bildes in ein Kantenbild mit Hilfe verschiedener Kantenfilter (Digitale Bildverarbeitung / Bernd Jähne. - 4. Aufl. - Berlin, Heidelberg, etc.: Springer, 1997) benutzt. Neben dem erheblichen Rechenaufwand hat diese Methode den Nachteil, dass das Bild durch eine Filterung bearbeitet, d.h. geändert wird, was die Kantenerkennung selbst beeinflußt und damit das Ergebnis verfälscht. Dabei können manche Kanten wegen mangelhaftem Kontrast überhaupt nicht erkannt bzw. zufällige Stellen, die einen ausreichenden Beleuchtungsgradient aufweisen, fälschlicherweise als Kanten erkannt werden.

Ein weiteres Verfahren (DE 19902401 C2) sieht zuerst eine Binarisierung des Bildes vor. Nach der Binarisierung wird eine Kantendetektion vorgenommen. Um eine Binarisierung durchzuführen, muss ein Schwellwert gebildet werden. Dieser kann entweder vorgegeben oder aus dem Bildinhalt dynamisch ermittelt werden.

Der vorgegebene Schwellwert (DE 4131778 C2) berücksichtigt aber keine Abweichungen, z.B. Beleuchtungsschwankungen, die auf einer Serie von aufeinander folgenden Aufnahmen bzw. auf unterschiedlichen Bereichen des aktuellen Bildes vorhanden sind. Dabei kann das zu untersuchende Bild nicht sauber binarisiert werden, was ebenso eine falsche Erkennung der Kanten verursacht.

Den Schwellwert direkt aus dem Inhalt des aktuellen Bildes zu ermitteln, ist eine Möglichkeit das Kantendetektierungsverfahren zum zu untersuchenden Bild anzupassen. Dafür benutzt man z.B. ein Histogramm (EP 0750272 B1, EP 0807297 B1), das die Häufigkeit von einzelnen, im Bild auftretenden Grauwerten darstellt. Aus dem absoluten oder lokalen Maximum bzw. Minimum des Histogramms kann ein Binarisierungsschwellwert entnommen werden.

Wenn das Histogramm jedoch für große Bildbereiche bestimmt wird, neigen Kanten dazu, verschmiert oder sogar überhaupt zerstört zu werden. Wenn umgekehrt der zu binarisierende Bereich zu klein ist, kann dieser Bereich nicht sauber binarisiert werden. Der Prozess, der zu binarisierende Bildbereich in geeignete Stücke zu unterteilen (EP 0750272 B1), ist wiederum auf vorgegebene Parameter angewiesen. Damit verliert das Verfahren seine Flexibilität.

Eine Reihe von Kandidatenbinärbildem aufzunehmen und auszuwerten, die mit fallenden bzw. mit steigenden Schwellwerten erzeugt wurden, um den bestmöglichen Binarisierungsschwellwert zu finden (EP 0807297 B1), ist sehr aufwändig und zeitraubend und ist vor allem nur in einer sehr beschränkten Anzahl vom Fällen möglich.

Darüber hinaus beeinflußt eine Binarisierung des Bildes die Kantenerkennung und damit verfälscht sie genauso wie jede andere Bildfilterung das Ergebnis der Kantendetektierung. Deswegen soll die Kantenerkennung am besten auf dem Originalgrauwertbild erfolgen.

Es ist ferner bekannt, dass man eine Kante aus einem Grauwertbild direkt mittels eines Kantenmodells ermitteln kann (Industrielle Bildverarbeitung / Christian Demant, Bernd Streicher-Abel, Peter Waszkewitz. - Berlin; Heidelberg: Springer, 1998). Das betrifft besonders den Fall, wenn der Ort der Kante bereits bekannt ist. Die Suche nach Kanten mit einem Kantenmodell erfolgt normalerweise auf Suchlinien in einer bestimmten Richtung.

Die Kriterien für die Detektierung einer Kante ergeben sich aus dem Grauwertprofil entlang dieser Suchlinie.

Dabei unterscheidet man zwei Kantenrichtungen, ansteigende und abfallende Kanten. Von einer abfallenden Kante spricht man, wenn das Grauwertprofil von hell nach dunkel verläuft, im umgekehrten Fall hat man eine ansteigende Kante vor sich.

Ein typisches Verfahren benutzt folgende Parameter:

- Kantenhöhe: Zur Detektierung einer gültigen Kante fordert man, dass eine bestimmte Mindestdifferenz der Grauwerte entlang der Suchlinie auftritt. Dies bezeichnet man als Kantenhöhe.
- Kantenlänge: Die Kantenlänge gibt an, auf welcher Strecke die durch die Kantenhöhe festgestellte Mindestdifferenz der Grauwerte auftreten muss.

An diesem Verfahren, das als Stand der Technik gilt, ist nachteilig, dass die vorgegebene Kantenhöhe und Kantenlänge bei jedem zu untersuchenden Bild unverändert bleiben müssen, und damit keine dynamische Anpassung an das aktuelle Bild angeboten wird.

Eine andere Lösung ist vom DE 4435796 C1 bekannt, in dem ein Verfahren zur automatischen Erkennung von Kanten und Durchmessern in Bildern beschrieben ist. Mit dessen Hilfe kann eine Kante nach einem vorgegebenen Profil und nach einem vorgegebenen prozentualen Schwellwert, der eine Ähnlichkeitsquote, z.B. mehr als 75%, erreicht hat, ermittelt werden.

Dabei benötigt man aber eine Musterkante, deren Profil weiter benutzt werden soll, und ebenso einen prozentualen Schwellwert als vorgegebenen Parameter. Deswegen bleibt dieses Verfahren vollständig objektspezifisch und bietet keine Anpassung zum zu untersuchenden Bild.

Zusammenfassend können die obengenannten Methoden, die entweder nur ein Histogramm oder nur ein Grauwertprofil benutzen, um eine Kante zu detektieren, und darüber hinaus die maßgebenden Parameter bereits allgemein vorgeben, keine flexible und gleichzeitig explizite Kantenerkennung auf einem zu untersuchenden Bild gewährleisten.

Der Erfindung liegt die Aufgabe zugrunde, ein Verfahren zur Kantenerkennung zu schaffen, das eine einfache, sichere, zum Inhalt des zu untersuchenden Bildes selbstanpassende und gleichzeitig explizite Erkennung der Kanten von unterschiedlichen Objekten erlaubt. Es wird dabei erkannt, ob eine Kante in einem zu untersuchenden Bereich vorhanden ist, und dann die genaue Lokalisierung der gesuchten Kante durchgeführt. Alle dafür benötigten Parameter sollen dynamisch aus dem zu untersuchenden Bild ermittelt und weiter nur für dieses Bild verwendet werden. Ein solches Verfahren ist z.B. bei Reglern ("adaptive Regler") seit langem Stand der Technik. Analog dazu kann das hier beschriebene Verfahren auch als Verfahren zur adaptiven Kantenerkennung genannt werden.

Die Lösung des technischen Problems ergibt sich durch die Merkmale der Patentansprüche 1 bis 19.

Erfindungsgemäß wird die Erkennung einer Kante in einem Testbereich eines zu untersuchenden Bildes entlang einer Suchlinie durchgeführt. Aus dem gesamten Testbereich wird das Histogramm und entlang der Suchlinie im Testbereich das Grauwertprofil gewonnen. Dabei geht man davon aus, dass das Objekt und der Hintergrund, deren Übergang die gesuchte Kante bildet, die Helligkeit $I_{surf}$ (*surface*) an der Oberfläche und $I_{bgrd}$ (*background*) am Hintergrund aufweisen, wobei das Objekt beispielsweise immer heller als der Hintergrund ist. Ansonsten sollen die Rollen des Objektes und des Hintergrunds vertauscht werden.

Desweiteren muss noch das Histogramm von einem Bildbereich, der immer und sicher nur den Hintergrund darstellt, gebildet werden. Dabei geht man davon aus, dass unterschiedliche Objekte auf dem gleichen bzw. ähnlichen Hintergrund untersucht werden sollen.

*Gemäß Anspruch 1* sollen das Histogramm und das Grauwertprofil als Gaußverteilungen behandelt und gemeinsam als Ausgangsdaten für die Kantenerkennung verwendet werden, aus deren eine kantenspezifische minimale Helligkeit $I_0$ und eine kantenspezifische minimale Helligkeitssteigung $\Delta I_0$ (eine Mindestdifferenz der Grauwerte) sowie die Länge der Teststrecke $L_0$ dynamisch ermittelt werden soll, mit deren Hilfe eine Kante gesucht wird. Die Teststrecke $L_0$, auf der die lokale maximale Helligkeit $I_{max}$ und die lokale Helligkeitssteigung $\Delta I$ ermittelt und entsprechend mit der kantenspezifischen minimalen Helligkeit $I_0$ und der kantenspezifischen minimalen Helligkeitssteigung $\Delta I_0$ verglichen werden, soll dabei entlang der Suchlinie verschoben werden.

Es ist bekannt, dass die Intensitätsverteilung eines Strahles ein Gaußsches Profil aufweist (Technische Optik: Grundlagen und Anwendungen / Gottfried Schröder. - 7.Aufl. -Würzburg: Vogel, 1990 (Kamprath-Reihe), S. 88). Da eine Oberfläche wegen ihrer Reflexion als Strahlquelle betrachtet werden kann, darf eine Helligkeitsverteilung, die von der Oberfläche über die Kante zum Hintergrund geht, mit einer Gaußverteilung beschrieben werden (Digitale Bildverarbeitung / Bernd Jähne. - 4. Aufl. - Berlin, Heidelberg, etc.: Springer, 1997). Dieses Modell hat sich auch als das Beste für die genaue Berechnung der Kantenposition mit Subpixel-Genauigkeit erwiesen (A Comparison of Algorithms for Sub-pixel Peak Detection / D. K. Naidu, R. B. Fisher. Department of Artifical Intelligence, University of Edinburgh, Scotland, U.K., DAI Research Paper No. 553, Oktober 17, 1991). Deshalb kann für die Beschreibung des Grauwertprofils sowie seiner Ableitung (Helligkeitssteigung) ein Gaußsches Profil angenommen werden.

Ein Histogramm ist eine Häufigkeitsverteilung der Helligkeit auf einem Objekt bzw. seinem Hintergrund. In natürlichen Bildern hat der Bildinhalt meistens ein mit der Ortsfrequenz abfallendes Amplitudenspektrum, wogegen das Rauschen ein im Frequenzbereich etwa konstantes Spektrum aufweist. Daraus folgt, dass das Histogramm sowie das Grauwertprofil auch ein Gaußsches Profil (Methoden der digitalen Bildsignalverarbeitung / Piero Zamperoni.-Braunschweig / Wiesbaden: Friedr. Vieweg & Sohn, 1989) bzw. ein aus mehreren Gaußverteilungen resultierendes Profil (Digitale Bildverarbeitung / Bernd Jähne. - 4. Aufl. - Berlin, Heidelberg, etc.: Springer, 1997) aufweisen.

Der Helligkeitswert, der am häufigsten an der Oberfläche eines Objektes aufgetreten ist, kann als Helligkeit dieses Objektes definiert werden. Dieses Verfahren weist für die zu untersuchende Oberfläche eine richtige Objekthelligkeit $I_{surf}$ auf, solange eine Störung mit einem bestimmten Helligkeitswert nicht eine größere oder vergleichbare Häufigkeit aufweist, als die der Objekthelligkeit $I_{surf}$. Dann ist es nicht mehr möglich zwischen der Störung und der Hauptoberfläche selbst zu unterscheiden (z.B. Schachbrett). Das gleiche gilt auch für den Hintergrund, der eine Hintergrundhelligkeit $I_{bgrd}$ aufweist.

Nach diesem Verfahren wird dann aus dem Histogramm eines Bereiches, der sich auf dem Hintergrund und nur auf dem Hintergrund befindet, eine bildspezifische generelle Hintergrundhelligkeit $I_{bgrd\_gen}$ ermittelt. Diese dient dazu, einen Helligkeitstrennwert $I_{sprt}$ *(separator)* zu berechnen:

$$I_{sprt} = \frac{I_{bgrd\_gen}}{\eta_0},$$

wobei:

$\eta_0$ - der Helligkeitsfaktor, der eine allgemeine grundlegende Konstante für die Kantenerkennung darstellt:

$$\eta_0 = \frac{\xi_2}{\xi_1} = e^{-\frac{3}{2}};$$

$\xi_1$ - der Wendepunktkoeffizient, der die Intensität eines Strahles am Wendepunkt seiner Intensitätsverteilung bestimmt, der vom Zentrum (Maximum) dieser Verteilung um die Standardabweichung $\sigma$ entfernt ist:

$$\xi_1 = e^{-\frac{1}{2}};$$

$\xi_2$ - der Randpunktkoeffizient, der die Intensität eines Strahles an seinem Rand bestimmt, der vom Zentrum (Maximum) dieser Verteilung um die zweifache Standardabweichung $2 * \sigma$ entfernt ist:

$$\xi_2 = e^{-2}.$$

Dabei soll beachtet werden, dass die generelle Hintergrundhelligkeit $I_{bgrd\_gen}$ immer einen größeren Wert als null aufweist, obwohl einzelne Pixel die Helligkeit null besitzen können. Dies ist auf Kameraeigenschaften sowie die Beleuchtungsbedingungen zurückzuführen.

Die generelle Hintergrundhelligkeit $I_{bgrd\_gen}$ und der Helligkeitstrennwert $I_{sprt}$ dienen nur als Orientierungswerte, um alle weiter benötigten Schwellwerte ausschließlich lokal ermitteln und verwenden zu können.

Aus dem Histogramm des zu untersuchenden Bereiches findet man die Objekthelligkeit $I_{surf}$ und die Hintergrundhelligkeit $I_{bgrd}$. Für die Oberflächenhelligkeit $I_{surf}$ soll der am häufigsten vorkommende Wert im Bereich von [$I_{sprt}$ - $I_{light}$] und für die Hintergrundhelligkeit $I_{bgrd}$ der am häufigsten vorkommende Wert im Bereich von [$I_{dark}$ - $I_{sprt}$] des Histogramms genommen werden, wobei:

$I_{dark}$ - die minimale Helligkeit aus dem Histogramm des zu untersuchenden Bereiches, die als erste eine Häufigkeit ungleich null aufweist;

$I_{light}$ - die maximale Helligkeit aus dem Histogramm des zu untersuchenden Bereiches, die als letzte eine Häufigkeit ungleich null aufweist.

Die Verwendung des Helligkeitstrennwertes $I_{sprt}$ gewährleistet ein sicheres und eindeutiges Verfahren um die Objekthelligkeit $I_{surf}$ und die Hintergrundhelligkeit $I_{bgrd}$ zu ermitteln, unabhängig davon, wie groß die Maximalwerte der Häufigkeiten an den Stellen $I_{surf}$ und $I_{bgrd}$ sind, und in welchem Verhältnis diese Maximalwerte zueinander stehen. Beispielsweise darf der Testbereich somit sehr viel mehr Hintergrund enthalten als Bereiche auf dem Objekt selbst.

Aus dem Grauwertprofil kann dann mit Hilfe bekannter konventioneller Rechenmethoden, z.B. die Methode der kleinsten Quadrate, die Standardabweichung $\sigma$ des Gaußschen Profils ermittelt werden.

Erfindungsgemäß kann diese Standardabweichung $\sigma$ für die Berechnung der Länge der Teststrecke $L_0$ folgendermaßen benutzt werden:

$$L_0 = \sqrt{3} * \sigma.$$

Mit der Teststrecke $L_0$ ist gleichzeitig eine bildspezifische und kurvencharakteristische Länge definiert, die für die weitere Kantensuche verwendet werden soll.

Das Grauwertprofil soll mit der Teststrecke $L_0$, die entlang der Suchlinie verschoben werden soll, nach folgenden Bedingungen abgesucht werden:

$$I_{max} \geq I_0 \ ;$$

$$\Delta I \geq \Delta I_0,$$

wobei:

$\Delta I$ - die lokale Helligkeitssteigung innerhalb der Teststrecke $L_0$;

$$\Delta I = I_{max} - I_{min};$$

$I_{max}$ - die lokale maximale Helligkeit innerhalb der Teststrecke $L_0$;
$I_{min}$ - die lokale minimale Helligkeit innerhalb der Teststrecke $L_0$.

Falls diese Bedingungen nirgendwo im zu untersuchenden Testbereich gleichzeitig erfüllt sind, befindet sich dort keine erkennbare Kante. Ansonsten ist eine Kante zwischen den zwei folgenden Stellen vorhanden. Die erste Stelle entspricht dem Endpunkt der Teststrecke $L_0$, wenn beide oben genannten Bedingungen zum ersten Mal erfüllt sind. Die zweite Stelle entspricht dem Startpunkt der Teststrecke $L_0$, wenn beide oben genannten Bedingungen zum letzten Mal erfüllt sind.

Die weitere genauere Suche nach der exakten Position der Kante kann nach unterschiedlichen bekannten Verfahren (Methoden der digitalen Bildsignalverarbeitung / Piero Zamperoni. - Braunschweig / Wiesbaden: Friedr. Vieweg & Sohn, 1989; Digitale Bildverarbeitung / Bernd Jähne. - 4. Aufl. - Berlin, Heidelberg, etc.: Springer, 1997), u. a. mit Subpixel-Genauigkeit (A Comparison of Algorithms for Sub-pixel Peak Detection / D. K. Naidu, R. B. Fisher. Department of Artifical Intelligence, University of Edinburgh, Scotland, U.K., DAI Research Paper No. 553, Oktober 17, 1991) durchgeführt werden.

Die kantenspezifische minimale Helligkeit $I_0$ und die kantenspezifische minimale Helligkeitssteigung $\Delta I_0$ sollen je nach Größe der absoluten Werte der Hintergrundhelligkeit $I_{bgrd}$ und der Objekthelligkeit $I_{surf}$ sowie deren Verhältnis berechnet werden. Man unterscheidet dabei folgende Fälle:

- Falls:

$$I_{bgrd} \leq I_{surf} * \xi_2;$$

$$I_{surf} \leq I_{lin},$$

wobei:

$I_{lin}$ - die obere Grenze des Linearitätsbereiches der Kamera
(z.B. 220 Graustufen),

sollen die gesuchten Parameter folgendermaßen berechnet werden:

$$I_0 = I_{surf} * \eta_0;$$

$$\Delta I_0 = I_{surf} * \eta_0;$$

- Falls:

$$I_{bgrd} \leq I_{surf} * \xi_2,$$

aber

$$I_{surf} > I_{lin},$$

soll die Objekthelligkeit $I_{surf}$ durch die Helligkeit $I_{lin}$ ersetzt und danach nochmals mit der Hintergrundhelligkeit $I_{bgrd}$ verglichen werden. Wenn die Bedingung

$$I_{bgrd} \leq I_{surf} * \xi_2$$

noch gültig ist, wobei:

$$I_{surf} = I_{lin},$$

sollen die gesuchten Parameter nach dem oben beschriebenen Verfahren berechnet werden.

- Falls:

$$I_{bgrd} > I_{surf} * \xi_2 ,$$

sollen die gesuchten Parameter folgendermaßen berechnet werden:

$$I_0 = I_{bgrd} + (I_{surf} - I_{bgrd}) * \eta_0;$$

$$\Delta I_0 = (I_{surf} - I_{bgrd}) * \eta_0,$$

wobei die Objekthelligkeit $I_{surf}$ durch den Helligkeitswert $I_{lin}$ im Falle der Überbelichtung

$$I_{surf} > I_{lin}$$

ersetzt werden soll.

Für den Fall, dass eine Kante von unterschiedlichen Objekten auf dem gleichen bzw. ähnlichen Hintergrund gesucht wird, kann *gemäß Anspruch 2* die generelle Hintergrundhelligkeit $I_{bgrd\_gen}$ sowohl für weitere zu untersuchende Bereiche der aktuellen Aufnahme als auch für weitere Aufnahmen als lokale Hintergrundhelligkeit $I_{bgrd}$ benutzt werden, weil die Reflexionsbedingungen sich grundsätzlich auf dem Objekt aber nicht auf dem Hintergrund ändern.

Da das Histogramm aus einem Bereich, der sich auf dem Hintergrund und nur auf dem Hintergrund befindet, ein Gaußisches Profil darstellt, kann der Wert

$$I_{sprt} = I_{bgrd\_gen} + 2 * \sigma_{I_{bgrd\_gen}}$$

*gemäß Anspruch 3* als oberer Grenzwert für die Hintergrundhelligkeit und damit als Trennwert $I_{sprt}$ angenommen werden, wobei $\sigma_{I_{bgrd\_gen}}$ die Standardabweichung dieses Gaußischen Profils ist.

Für den Fall, dass eine Kante vom gleichen bzw. ähnlichen Objekt auf unterschiedlichen Hintergründen gesucht wird, soll zuerst aus einem Bereich, der sich auf dem Objekt und nur auf dem Objekt befindet, eine bildspezifische generelle Objekthelligkeit $I_{surf\_gen}$ ermittelt werden. Sofern eine Kante vom gleichen bzw. ähnlichen Objekt auf unterschiedlichen Hintergründen gesucht wird, kann *gemäß Anspruch 4* die generelle Objekthelligkeit $I_{surf\_gen}$ sowohl für weitere zu untersuchende Bereiche im gesamten aktuellen Bild als auch für weitere Bilder unter gleichen Aufnahmebedingungen als lokale Objekthelligkeit $I_{surf}$ benutzt werden.

*Gemäß Anspruch 5* kann anhand der generellen Objekthelligkeit $I_{surf\_gen}$ ein Helligkeitstrennwert $I_{sprt}$ fol-

gendermaßen berechnet werden:

$$I_{sprt} = I_{surf\_gen} * \xi_1.$$

Da das Histogramm aus einem Bereich, der sich auf dem Objekt und nur auf dem Objekt befindet, ein Gaußisches Profil darstellt, kann der Wert

$$I_{sprt} = I_{surf\_gen} - 2*\sigma_{I_{surf\_gen}}$$

**gemäß Anspruch 6** als unterer Grenzwert für die Objekthelligkeit und damit als Trennwert $I_{sprt}$ angenommen werden, wobei $\sigma_{I_{surf\_gen}}$ die Standardabweichung dieses Gaußischen Profils ist.

*Gemäß Anspruch 7* werden die Werte $I_{surf}$ und $I_{bgrd}$ benutzt, um u.a. den unteren Helligkeitsschwellwert $I_{sprt\_dark}$ und den oberen Helligkeitsschwellwert $I_{sprt\_light}$ zu berechnen, die dazu dienen den mittleren Bereich des Grauwertprofils von seinen Randbereichen abzutrennen, die aus den Hintergrund bzw. das Objekt stammen und deswegen mit möglichen Störungen belastet sein können. Diese wird eine praktische Kurvendiskussion erlauben, damit die Standardabweichung σ des Grauwertprofils mit wesentlich höherer Genauigkeit und Sicherheit auf dem abgetrennten Bereich der Kurve mit Hilfe der bekannten konventionellen Rechenmethoden, z.B. die Methode der kleinsten Quadraten, ermittelt werden kann.

Der untere Helligkeitsschwellwert $I_{sprt\_dark}$ und der obere Helligkeitsschwellwert $I_{sprt\_light}$ sollen erfindungsgemäß je nach absoluter Größe der Hintergrundhelligkeit $I_{bgrd}$ , der Objekthelligkeit $I_{surf}$ sowie deren Verhältnis berechnet werden. Man unterscheidet dabei folgende Fälle:

- Falls gilt:

$$I_{bgrd} \le I_{surf}*\xi_2;$$

$$I_{surf} \le I_{lin},$$

wobei: $I_{lin}$- die obere Grenze des Linearitätsbereiches der Kamera,
sollen die gesuchten Parameter folgendermaßen berechnet werden:

$$I_{sprt\_dark} = I_{surf}*\eta_0;$$

$$I_{sprt\_light} = I_{surf}*(1 - \eta_0).$$

- Falls gilt:

$$I_{bgrd} \le I_{surf}*\xi_2;$$

aber

$$I_{surf} > I_{lin},$$

soll die Objekthelligkeit $I_{surf}$ durch die Helligkeit $I_{lin}$ ersetzt und danach nochmals mit der Hintergrundhelligkeit $I_{bgrd}$ verglichen werden. Wenn die Bedingung

$$I_{bgrd} \le I_{surf} *\xi_2$$

noch gültig ist, wobei:

$$I_{surf} = I_{lin},$$

sollen die gesuchten Parameter nach dem oben beschriebenen Verfahren berechnet werden.

- Falls gilt:

$$I_{bgrd} > I_{surf} * \xi_2,$$

sollen die Parameter folgendermaßen berechnet werden:

$$I_{sprt\_dark} = I_{bgrd} + (I_{surf} - I_{bgrd}) * \eta_0;$$

$$I_{sprt\_light} = I_{surf} - (I_{surf} - I_{bgrd}) * \eta_0,$$

wobei die Objekthelligkeit $I_{surf}$ durch den Helligkeitswert $I_{lin}$ im Falle der Überbelichtung

$$I_{surf} > I_{lin}$$

ersetzt werden soll.

*Gemäß Anspruch 8* soll die Hilfsteststrecke $l_0$, die man als Abstand zwischen den Positionen auf dem Grauwertprofil ermittelt, an denen das Profil zuerst den Wert $I_{sprt\_dark}$ und zuerst den Wert $I_{sprt\_light}$ aufweist, ohne einen Verallgemeinerungsverlust als Standardabweichung $\sigma$ des gaußförmigen Grauwertprofils angenommen werden können:

$$l_0 \cong \sigma.$$

Daraus folgt, dass die Teststrecke $L_0$ direkt aus der Hilfsteststrecke $l_0$ ermittelt werden kann:

$$L_0 = \sqrt{3} * l_0.$$

Darüber hinaus kann die Kantensuche erfindungsgemäß gleich zwischen den zwei oben genannten Positionen durchgeführt werden.

*Gemäß Anspruch 9* kann die Länge der Teststrecke $L_0$ auf einem speziellen Kalibrierungstestbereich, der eine typische Kante enthält, ermittelt und weiter für das gesamte Bild verwendet werden. Diese Teststrecke $L_0$ ist zwar ortsspezifisch, stellt aber eine Länge dar, die sich an verschiedenen Stellen des Bildes unter vergleichbaren Beleuchtungs- und Schärfebedingungen nicht sehr stark unterscheiden wird. Deswegen kann man die Teststrecke $L_0$ ohne einen Verallgemeinerungsverlust als eine bildspezifische Konstante verwenden.

*Gemäß Anspruch 10* darf die ermittelte Länge der Teststrecke $L_0$ nach dem Abtasttheorem nicht kleiner als drei Pixel sein. Ansonsten soll die Länge $L_0 = 3$ festgelegt werden.

Das oben beschriebene Verfahren ist nur für die Erkennung einer einfachen Kante vorgesehen. Falls eine komplexe Kante, z.B. eine Doppelkante beim Holzbrett mit Rinde, untersucht werden soll, darf dieses Verfahren nicht mehr direkt verwendet werden. Außerdem kann eine zu untersuchende Kante, die vermutlich eine Doppelkante sein soll, möglicherweise doch eine einfache Kante sein. Das vorliegende Verfahren soll diese Kante auch richtig erkennen können.

Eine solche Doppelkante besteht aus zwei Übergangsbereichen: zwischen dem Hintergrund und der Zwischenzone (Rinde) sowie zwischen der Zwischenzone (Rinde) und dem Objekt (Holz). Jeder Übergangsbereich besitzt eine eigene Kante. Sowohl das Grauwertprofil als auch das Histogramm einer Doppelkante weisen immer noch ein Gaußprofil auf, wobei jedes Profil (Grauwertprofil bzw. Histogramm) aus einer Kombination zweier Gaußverteilungen besteht.

Desweiteren geht man davon aus , dass unterschiedliche Objekte auf dem gleichen bzw. ähnlichen Hintergrund untersucht werden sollen.

*Gemäß Anspruch 11* soll die Erkennung einer Doppelkante folgendermaßen durchgeführt werden.

Das oben beschriebene Verfahren zur Erkennung einer einfachen Kante soll zuerst als eine Kalibrierungsroutine durchgeführt werden. Bei einer solchen Kalibrierung bekommt man aus einem Kalibrierungstestbereich, auf dem eine typische einfache Kante vorhanden ist, und aus einem weiteren Bildbereich, der immer und sicher nur den Hintergrund enthält, folgende Parameter:

- die generelle Hintergrundhelligkeit $I_{bgrd\_gen}$ ;
- den generellen Helligkeitstrennwert $I_{sprt}$;
- die Länge der Teststrecke $L_0$.

Danach wird die Doppelkante selbst untersucht, wobei ein Grauwertprofil und ein Histogramm an jeder zu untersuchenden Stelle dieser Kante gewonnen werden soll.

Mit dem generellen Helligkeitstrennwert $I_{sprt}$ findet man im Bereich von $[I_{dark} - I_{sprt}]$ des Histogramms die lokale Hintergrundhelligkeit $I_{bgrd}$. Diese wird für Berechnung der kantenspezifischen Parameter - die kantenspezifische minimale Helligkeit $I_{0\_bgrd}$ und die kantenspezifische minimale Helligkeitssteigung $\Delta I_{0\_bgrd}$ - benutzt, um die Suche nach einer Kante zwischen dem Hintergrund und der Zwischenzone durchzuführen. Analog dazu findet man im Bereich von $[I_{sprt} - I_{light}]$ des Histogramms die lokale Objekthelligkeit $I_{surf}$ und nutzt diese für Berechnung der kantenspezifischen Parameter - die kantenspezifische minimale Helligkeit $I_{0\_surf}$ und die kantenspezifische minimale Helligkeitssteigung $\Delta I_{0\_surf}$ - um die Suche nach einer Kante zwischen der Zwischenzone und dem Objekt durchzuführen.

Diese Parameter werden folgendermaßen definiert:

$$I_{0\_bgrd} = \frac{I_{bgrd}}{\xi_1};$$

$$\Delta I_{0\_bgrd} = \frac{I_{bgrd}}{\xi_1};$$

$$I_{0\_surf} = I_{surf} * \xi_1;$$

$$\Delta I_{0\_surf} = I_{surf} * \eta_0.$$

Falls unter Umständen festgestellt wurde, dass:

$$I_{bgrd} < I_{bgrd\_gen},$$

soll die lokale Hintergrundhelligkeit $I_{bgrd}$ durch die generelle Hintergrundhelligkeit $I_{bgrd\_gen}$ ersetzt werden:

$$I_{bgrd} = I_{bgrd\_gen}.$$

Das Grauwertprofil soll von der Seite des Hintergrundes mit der Teststrecke $L_0$ jeweils nach jeder zu suchenden Kante abgesucht werden.

Die weitere genauere Suche nach der exakten Position jeder Kante in dem entsprechenden lokalisierten Bereich kann dann, wie bei der einfachen Kante beschrieben, nach unterschiedlichen bekannten Verfahren, u.a. mit Subpixel-Genauigkeit durchgeführt werden.

*Gemäß Anspruch 12* soll eine Kante im Übergangsbereich zwischen der Zwischenzone und dem Objekt als erste gesucht werden, weil diese wegen der starken Helligkeit des Objektes wesentlich besser ausgeprägt ist, als die Kante im Übergangsbereich zwischen dem Hintergrund und der Zwischenzone.

Sobald eine Kante im Übergangsbereich zwischen der Zwischenzone und dem Objekt gefunden wird, kann die Suche nach der Kante im Übergangsbereich zwischen dem Hintergrund und der Zwischenzone stattfinden. Die zweite Kantensuche soll vom Anfang des Testbereiches bis zur Position durchgeführt werden, an der sich die bereits ermittelte Kante zwischen der Zwischenzone und dem Objekt befindet.

Falls keine Zwischenzone-Objekt - Kante gefunden wurde, soll eine Kante innerhalb des ganzen Testbereiches gesucht werden. In diesem Fall kann dann nur eine Kante (zwischen dem Hintergrund und dem Objekt) bzw. gar keine Kante in dem zu untersuchenden Testbereich gefunden werden.

Für die Erkennung einer Doppelkante, die aus zwei Übergangsbereichen zwischen dem Hintergrund und der Zwischenzone sowie zwischen der Zwischenzone und dem Objekt, besteht, wobei jeder Übergangsbereich eine eigene Kante besitzt, und immer das gleiche bzw. ähnliche Objekt auf verschiedenen Hintergründen untersucht wird, soll *gemäß Anspruch 13* eine Kalibrierung aus einem Kalibrierungstestbereich, auf dem eine typische einfache Kante vorhanden ist, und aus einem weiteren Bildbereich, der immer und sicher nur das Objekt enthält, durchgeführt werden und dabei folgende Parameter ermittelt werden:

- die generelle Objekthelligkeit $I_{surf\_gen}$;
- den generellen Helligkeitstrennwert $I_{sprt}$ ;
- die Länge der Teststrecke $L_0$.

Damit kann die Kantenerkennung auf Basis stabiler Referenzwerte durchgeführt werden.

*Gemäß Anspruch 14* soll im Testbereich der Anteil des Hintergrundes und des Objektes groß genug gegenüber dem Anteil des dazwischen liegenden Bereiches sein. Damit soll eine wesentlich präzisere und eindeutige Ermittlung der Objekthelligkeit $I_{surf}$ und der Hintergrundhelligkeit $I_{bgrd}$ aus dem Histogramm gewährleistet werden.

Falls eine komplexe Mehrfachkante mehr als zwei einfache Kanten enthält, soll jede einzelne von ihnen *gemäß Anspruch 15* folgendermaßen erkannt werden. Die hellste Kante wird zuerst nach dem oben beschriebenen Verfahren zur Erkennung einer Doppelkante gesucht. Die erste gefundene Kante weist dann eine Helligkeit auf, die als lokale Objekthelligkeit $I_{surf\_loc}$ weiter für die Suche nach der nächst dunkleren Kante verwendet werden kann. Mit dieser Kettensuche werden alle weitere Kanten aufgespürt. Allerdings sollen alle Suchschritte mit der Hintergrundhelligkeit $I_{bgrd}$ abgestimmt werden, damit das Kantenerkennungsverfahren nicht über den Hintergrund hinaus läuft.

Eine weitere Möglichkeit jede einzelne Kante einer komplexen Mehrfachkante zu erkennen, besteht *gemäß Anspruch 16* darin, dass zuerst die dunkelste Kante nach dem oben beschriebenen Verfahren zur Erkennung einer Doppelkante gesucht wird. Die erste gefundene Kante weist dann eine Helligkeit auf, die als lokale Hintergrundhelligkeit $I_{bgrd\_loc}$ weiter für die Suche nach der nächst helleren Kante verwendet werden kann. Mit dieser Kettensuche werden alle weiteren Kanten aufgespürt. Allerdings sollen alle Suchschritte mit der Objekthelligkeit $I_{surf}$ abgestimmt werden, damit das Kantenerkennungsverfahren nicht über das Objekt hinaus läuft.

*Gemäß Anspruch 17* soll die Suchlinie, der entlang ein Grauwertprofil gebildet wird, quer zur gesuchten Kante, jedoch innerhalb des Testbereiches liegen. Das Grauwertprofil kann sowohl aus einer einzelnen Pixelreihe als auch als Mittelwertkurve aus mehreren parallel zur Suchlinie **6** liegenden benachbarten Pixelreihen gebildet werden.

Nach dem Abtasttheorem (Digitale Bildverarbeitung / Bernd Jähne. - 4. Aufl. - Berlin, Heidelberg, etc.: Springer, 1997) soll die Abtastlänge eines Signals, um eine Verfälschung dieses Signals beim Abtasten zu vermeiden, mindestens drei Abtastpunkte enthalten. Um einen repräsentativen Mittelwert für die Grauwertprofilbildung zu gewährleisten, soll deshalb die Anzahl der Abtastpixel mindestens drei sein. Bei größerer Anzahl der Abtastpixel kann die Kantenerkennung von zufällig aufgetretenen Störungen jedoch stark beeinflusst werden. Deshalb kann die Anzahl der zur Bildung des Grauwertprofils gezogenen Pixelreihen, das entlang der Suchlinie gewonnen werden soll, beispielsweise als drei festgelegt werden.

Sowohl das Grauwertprofil als auch das Histogramm können gewisse zufällige Störungen bzw. Rauschen enthalten. *Gemäß Anspruch 18* sollen nur diese Kurven aber nicht das Bild selbst gefiltert werden, um eine fehlerfreie Kurvendiskussion durchführen zu können.

Beim Einsatz konventioneller Filterungsmethoden wird jedoch das Kurvenprofil verfälscht. Die Nachteile dieser Filters können durch den Einsatz der morphologischen Filterung vermieden werden, die *gemäß Anspruch 19* für die Glättung der zu untersuchenden Kurven verwendet werden soll.

Durch das hier genannte Verfahren zur adaptiven Kantenerkennung kann sowohl auf eine Kantensuche, mittels Umwandlung des gesamten Bildes in ein Kantenbild mit Hilfe verschiedener Kantenfilter, als auch auf eine Binarisierung des Bildes, sowie auf eine direkte Kantendetektion auf einem Grauwertbild mittels fest definierter Parameter wie z.B. Kantenhöhe und Kantenlänge verzichtet werden.

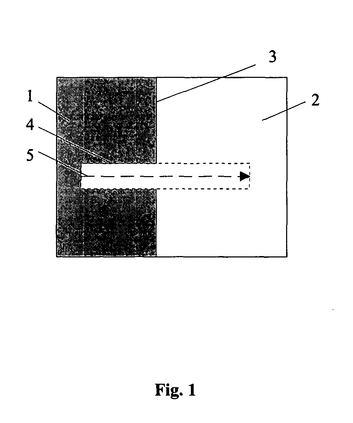

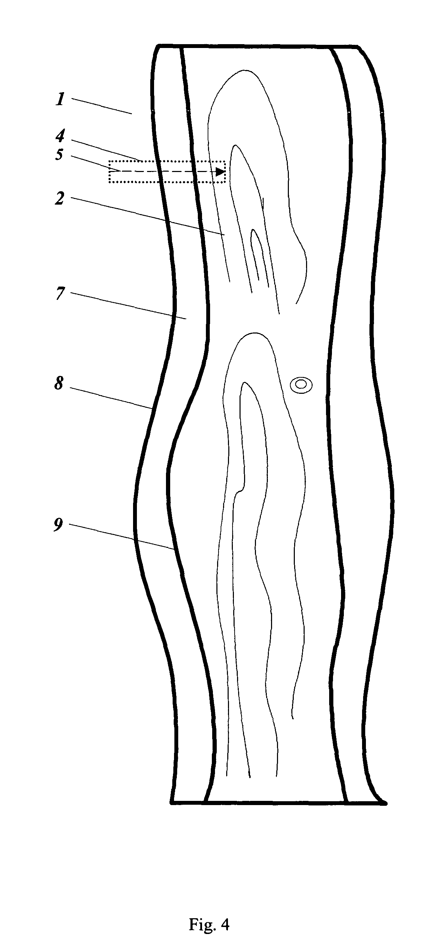

Die Einzelheiten der Erfindung werden in den nachfolgenden Ausführungsbeispielen anhand der **Fig. 1 - 6** erläutert.

Als Beispiel kann eine einfache Kante 3 eines hellen Objektes 2 auf einem dunklen Hintergrund *1* (**Fig. 1**) angenommen werden. Die Kante *3* wird innerhalb des Testbereiches *4* (z.B. ein Rechteck) entlang der Suchlinie *5* gesucht.

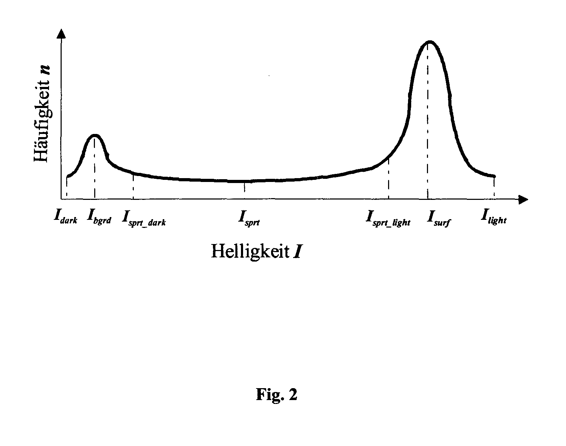

Mit Hilfe des Histogramms aus dem Testbereich *4* kann sowohl die Objekthelligkeit $I_{surf}$ als auch die Hintergrundhelligkeit $I_{bgrd}$ ermittelt werden. Es ist dabei wichtig, zuvor einen Helligkeitstrennwert $I_{sprt}$ aus der generellen Hintergrundhelligkeit $I_{bgrd\_gen}$ zu ermitteln, um die Trennung der entsprechenden Teile des Histogramms (Hintergrund und Objekt) eindeutig durchführen zu können **(Fig. 2).**

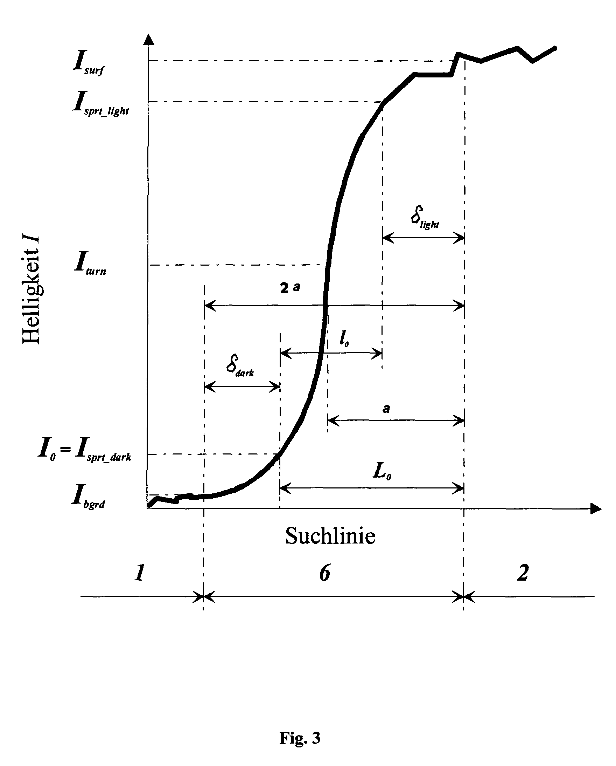

Die Position dieser Kante *3* soll auf dem Grauwertprofil gesucht werden, das entlang einer Suchlinie *5* beispielsweise von dem dunklen Hintergrundbereich zum hellen Objektbereich gebildet wurde **(Fig. 3)**. Diese Suche findet innerhalb einer Teststrecke $L_0$ statt, die entlang der Suchlinie verschoben wird, wobei auf der Teststrecke $L_0$ die lokale maximale Helligkeit $I_{max}$ und die lokale Helligkeitssteigung $\Delta I$ ermittelt und entsprechend mit der kantenspezifischen minimalen Helligkeit $I_0$ und mit der kantenspezifischen minimalen Helligkeitssteigung $\Delta I_0$ (Mindestdifferenz der Grauwerte) verglichen wird. Die Länge der Teststrecke $L_0$ , die Größe des kantenspezifischen minimalen Helligkeitswertes $I_0$ und der kantenspezifischen minimalen Helligkeitssteigung $DI_0$ sollen dabei an die lokalen Helligkeitsbedingungen angepasst werden.

Wie oben schon begründet wurde, weist das Histogramm sowie das Grauwertprofil ein Gaußsches bzw. ein aus mehreren Gaußverteilungen resultierendes Profil auf. Das bedeutet, dass diese Kurven eine Normalverteilung nach Gauß und damit eine exponentielle Funktion darstellen und deshalb bestimmte Verhältnisse zwischen charakteristischen Punkten besitzen.

Das Grauwertprofil kann als Gaußsches Profil folgendermaßen beschrieben werden:

$$I(x) = I_{surf}*e^{-\frac{x^2}{2*\sigma^2}}, \tag{1}$$

wobei:

$I(x)$ - aktuelle Helligkeit, die der zu untersuchende Punkt aufweist, der sich in der Entfernung x vom Profilmaximum befindet;

$I_{surf}$ - Objekthelligkeit, die auf dem Profilmaximum erstmalig und sicher auftritt;

$x$ - die Entfernung des zu untersuchenden Punktes von dem Punkt, der das Profilmaximum aufweist.

Die wichtigsten Punkte auf dem Grauwertprofil für das vorliegenden Verfahren sind die, die eine Entfernung von dem Maximum des Profils haben, die der einfachen und der zweifachen Standardabweichung $\sigma$ des Gaußsches Profils entsprechen **(Fig. 3)**.

Die einfache Standardabweichung $\sigma$ ausgehend vom Maximum des Profils weist einen Punkt auf, an dem das Grauwertprofil einen Wendepunkt $I_{turn}$ (turn point) besitzt und sich damit theoretisch eine Kante **3** befinden kann:

$$I_{turn} = I_{surf}*\xi_1, \tag{2}$$

wobei:

$I_{surf}$ - die Objekthelligkeit;

$\xi_1$ - der Wendepunktkoeffizient:

$$\xi_1 = e^{-\frac{1}{2}}. \tag{3}$$

Die zweifache Standardabweichung $2*\sigma$ ausgehend vom Maximum des Profils weist einen Punkt auf, an dem das Grauwertprofil die Intensität von einem Strahlrand hat und sich damit der Hintergrund **1** befindet:

$$I_{bgrd} = I_{surf}*\xi_2, \tag{4}$$

wobei:

$\xi_2$ - der Randpunktkoeftizient:

$$\xi_2 = e^{-2}. \tag{5}$$

Der Abstand zwischen den Punkten, welche die Werte $I_{turn}$ und $I_{bgrd}$ aufweisen, entspricht ebenso der Standardabweichung $\sigma$ und ist vom jeweiligen Grauwertprofil **(Fig. 3)** streng abhängig. Das Verhältnis zwischen diesen Werten ist jedoch für alle möglichen Grauwenprofile, die über eine Kante 3 verlaufen, konstant und stellt einen minimalen Helligkeitsfaktor $\eta_0$ dar. Nach (2) bis (5) gilt:

$$\eta_0 = \frac{I_{bgrd}}{I_{turn}} = \frac{\xi_2}{\xi_1} = c^{-\frac{3}{2}}. \tag{6}$$

Damit stellt der Helligkeitsfaktor $\eta_0$ ein minimales Verhältnis zwischen den Helligkeiten der erst möglichen Kantenposition **3** und dem Hintergrund **1** dar.

Die Länge der Teststrecke $L_0$ darf dabei nicht kleiner als der Abstand zwischen dem Wendepunkt $I_{turn}$ und dem Randpunkt (Hintergrundhelligkeit $I_{bgrd}$) sein, was der Standardabweichung $\sigma$ des Grauwertprofils entspricht. Gleichzeitig darf die Teststrecke $L_0$ die doppelte Größe der Standardabweichung $\sigma$ nicht überschreiten. Sonst wird die Teststrecke größer als der gesamte Übergangsbereich **6** zwischen dem Hintergrund **1** und dem Objekt **2 (Fig. 3).** Dann kann die Kantensuche nur nach der kantenspezifischen minimalen Helligkeitssteigung $\Delta I_0$, ohne Berücksichtigung der kantenspezifischen minimalen Helligkeit $I_0$, die eine wichtige Bedingung für die adaptive Kantenerkennung darstellt, durchgeführt werden. Deshalb soll folgende Bedingung erfüllt werden:

$$\sigma < L_0 < 2^*\sigma. \tag{7}$$

Dies bedeutet, dass eine Kante **3** anwesend ist, solange die folgenden Bedingungen innerhalb der Teststrecke $L_0$ erfüllt sind:

$$I_{max} \geq I_0; \tag{8}$$

$$\Delta I = I_{max} - I_{min} \geq \Delta I_0 , \tag{9}$$

wobei:

$$\frac{I_{min}}{I_{max}} = \eta \geq \eta_0, \tag{10}$$

$I_{max}$ - die lokale maximale Helligkeit innerhalb der Teststrecke $L_0$;
$I_{min}$ - die lokale minimale Helligkeit innerhalb der Teststrecke $L_0$ ;
$\Delta I$ - die lokale Helligkeitssteigung innerhalb der Teststrecke $L_0$;
$\eta$ - der lokale Helligkeitsfaktor innerhalb der Teststrecke $L_0$.

Zur Bestimmung der Parameter $I_0$ und $\Delta I_0$ werden folgende Grenzfälle betrachtet. Wenn der Endpunkt der Teststrecke $L_0$ bereits die Objektoberfläche **2** erreicht hat:

$$I_{max} = I_{surf}, \tag{11}$$

ist die Kante 3 noch immer innerhalb dieser Teststrecke. Dann folgt aus (10):

$$I_{min} = I_{max} * \eta_0. \tag{12}$$

Die lokale minimale Helligkeit $I_{min}$ entspricht dabei noch nicht der Objekthelligkeit ($I_{min} < I_{surf}$) aber nicht mehr der Hintergrundhelligkeit ($I_{min} > I_{bgrd}$). Sie weist nun auf einen Übergangsbereich 6 zwischen dem Hintergrund 1 und dem Objekt 2, in dem sich eine Kante 3 befinden kann, und bestimmt damit die minimale Helligkeit $I_0$. Die kantenspezifische minimale Helligkeit $I_0$ kann dann mit Hilfe von (12) und (11) berechnet werden:

$$I_0 = I_{surf}*\eta_0, \tag{13}$$

Befindet sich der Endpunkt der Teststrecke $L_0$ bereits in einer Position, die der Helligkeit $I_0$ entspricht, und der Startpunkt noch auf dem Hintergrund *1*, soll im Falle einer wirklichen Kante erst die Bedingung (9) erfüllt sein. D. h. die Suche nach einer Kante darf nur dann angefangen werden, wenn die lokale Helligkeitssteigung $\Delta I$ innerhalb der Teststrecke $L_0$ die kantenspezifische minimale Helligkeitssteigung $\Delta I_0$ erreicht. Unter der Annahme, dass der Startpunkt der Teststrecke $L_0$ sich im günstigsten Fall in einer Position befindet, die den Helligkeitswert null aufweist, kann die kantenspezifische minimale Helligkeitssteigung $\Delta I_0$, die die Startbedingungen für die Kantensuche bestimmt, folgendermaßen definiert werden:

$$\Delta I_0 = I_0 - 0 = I_0 = I_{surf}*\eta_0. \tag{14}$$

Damit kann eine Kante *3* zwischen den zwei folgenden Positionen und nur dort vorhanden sein. Die erste Position entspricht dem Endpunkt der Teststrecke $L_0$, wenn die Bedingungen (8) und (9) zum ersten Mal innerhalb der Teststrecke $L_0$ gleichzeitig erfüllt sind. Die zweite Position entspricht dem Startpunkt der Teststrecke $L_0$, wenn die Bedingungen (8) und (9) zum letzten Mal innerhalb der Teststrecke $L_0$ gleichzeitig erfüllt sind.

Da das Grauwertprofil eine Gaußsche Funktion darstellt, folgt aus (13) und (1) unter der Annahme, dass der Endpunkt der Teststrecke $L_0$ die Helligkeit $I_{surf}$ und der Startpunkt die Helligkeit $I_0$ besitzt:

$$\eta_0 = \frac{I_0}{I_{surf}} = e^{-\frac{1}{2}(\frac{L_0}{\sigma})^2}. \tag{15}$$

Aus (15) und (6) kann dann die Länge der Teststrecke $L_0$ berechnet werden:

$$L_0 = \sqrt{3}*\sigma, \tag{16}$$

die bildspezifisch und gleichzeitig kurvencharakteristisch ist und für die Kantensuche verwendet werden soll. Die Standardabweichung des Grauwertprofils $\sigma$ kann dabei mit Hilfe der bekannten konventionellen Rechenmethoden, z.B. die Methode der kleinsten Quadrate, ermittelt werden.

Der Wendepunkt $I_{turn}$ des Grauwertprofils **(Fig. 3)** kann als Helligkeitstrennwert $I_{sprt}$ für die Trennung zwischen Hintergrundbereich *1* und Objektbereich *2* auf dem gemeinsamen Histogramm **(Fig. 2)** verwendet werden. Weil aber bisher nur die generelle Hintergrundhelligkeit $I_{bgrd\_gen}$ bekannt ist, die aus einem Bereich ermittelt wurde, in dem sich mit Sicherheit nur Hintergrund befindet, soll der Helligkeitstrennwert $I_{sprt}$ folgendermaßen berechnet werden. Aus (2), (4) und (6) folgt für ein Gaußprofil:

$$I_{sprt} = I_{turn} = I_{surf}*\xi_1 = \frac{I_{bgrd\_gen}}{\xi_2}*\xi_1 = \frac{I_{bgrd\_gen}}{\eta_0}. \tag{17}$$

Damit liegen die Helligkeitswerte für den Hintergrund *1* im Bereich von $[I_{dark} - I_{sprt}]$ und für das Objekt *2* im Bereich von $[I_{sprt} - I_{light}]$ des Histogramms **(Fig. 2),** wobei:

$I_{dark}$ - der erste Helligkeitswert, der auf dem Histogramm eine Häufigkeit ungleich null aufweist;
$I_{light}$ - der letzte Helligkeitswert, der auf dem Histogramm eine Häufigkeit ungleich null aufweist.

Aus diesen zwei Bereichen sollen die Hintergrundhelligkeit $I_{bgrd}$ und die Objekthelligkeit $I_{surf}$ als häufigste Werte innerhalb der jeweiligen Bereiche **(Fig. 3)** berechnet werden.

Dabei soll überprüft werden, ob beim gemessenen Grauwertprofil:

$$I_{bgrd} \leq I_{surf}*\xi_2; \tag{18}$$

$$I_{surf} \leq I_{lin}, \tag{19}$$

wobei $I_{lin}$ der oberen Grenze des Linearitätsbereiches der Kamera (z.B. 220 Graustufen) entspricht. Je nach Erfüllung dieser Bedingungen soll das Kantenerkennungsverfahren nach einem der weiter unten beschriebenen Fälle behandelt werden.

Falls die Bedingungen (18) und (19) erfüllt sind, darf das zu untersuchende Objekt **2** als strahlende Quelle angenommen werden. Dabei sollen alle gesuchten Parameter von der Objekthelligkeit $I_{surf}$ her ermittelt werden.

Die kantenspezifische minimale Helligkeit $I_0$ soll dabei größer sein als die möglichen Abweichungen von der Hintergmndhelligkeit $I_{bgrd}$ nach oben, die vom Rauschen verursacht werden können **(Fig. 3),** und gleichzeitig die kantenspezifische minimale Helligkeitssteigung $\Delta I_0$ gewährleisten, die vom minimalen Helligkeitsfaktor $\eta_0$ und von der Objekthelligkeit $I_{surf}$ abhängig ist. Deswegen sollen weitere für die Kantenerkennung notwendige Parameter definiert werden. Zu diesen Parametern gehören der untere Helligkeitsschwellwert $I_{sprt\_dark}$ und der obere Helligkeitsschwellwert $I_{sprt\_light}$ **(Fig. 2)** sowie der untere Sicherheitsabstand $\delta_{dark}$ und der obere Sicherheitsabstand $\delta_{light}$, die diese Helligkeitsschwellwerte bestimmen.

Der untere Helligkeitsschwellwert $I_{sprt\_dark}$ und der obere Helligkeitsschwellwert $I_{sprt\_light}$ trennen den Objekt- und den Hintergrundbereich auf dem Grauwertprofil **(Fig. 3)** sowie auf dem Histogramm **(Fig. 2)** von den restlichen Bereichen, die mit möglichen Störungen belastet sein können. Dies erlaubt eine praktische Kurvendiskussion, die beispielsweise für die Ermittlung der Standardabweichung σ des Grauwertprofils benötigt wird.

Da die kantenspezifische minimale Helligkeit $I_0$ direkt als unterer Helligkeitsschwellwert $I_{sprt\_dark}$ **(Fig. 3)** angenommen werden kann, gilt nach (13):

$$I_{sprt\_dark} = I_0 = I_{surf}*\eta_0. \tag{20}$$

Der Wertebereich $[I_{bgrd} - I_{sprt\_dark}]$ kann als Sicherheitszone im Hintergrundbereich mit dem Sicherheitsabstand $\delta_{dark}$ zwischen dem Hintergrund **1** und der Stelle, ab der eine Kante **3** vorhanden sein kann, für die Kurvendiskussion sowohl des Grauwertprofils **(Fig. 3)** als auch des Histogramms **(Fig. 2)** dienen.

Der Wertebereich $[I_{sprt\_light} - I_{surf}]$ kann analog dazu als Sicherheitszone im Objektbereich mit dem Sicherheitsabstand $\delta_{light}$ zwischen der Stelle, ab der eine Kante **3** nicht mehr vorhanden sein kann, und dem Objekt **2** für die Kurvendiskussion sowohl des Grauwertprofils **(Fig. 3)** als auch des Histogramms **(Fig. 2)** dienen. Dabei kann die kantenspezifische minimale Helligkeitssteigung $\Delta I_0$ den notwendigen Unterschied zwischen der Objekthelligkeit $I_{surf}$ und dem oberen Helligkeitsschwellwert $I_{sprt\_light}$ gewährleisten:

$$I_{sprt\_light} = I_{surf} - \Delta I_0. \tag{21}$$

Aus (21) und (14) folgt:

$$I_{sprt\_light} = I_{surf}*(1- \eta_0). \tag{22}$$

Aus dem Grauwertprofil und zwar aus dem von den Helligkeitsschwellwerten $I_{sprt\_dark}$ und $I_{sprt\_light}$ beschränkten Bereich kann dann mit Hilfe bekannter konventioneller Rechenmethoden, z.B. die Methode der kleinsten Quadrate, die Standardabweichung σ mit wesentlich höherer Genauigkeit und Sicherheit ermittelt werden.

Die Standardabweichung σ und die Teststrecke $L_0$ kann auch durch eine Hilfsstrecke $l_0$ berechnet werden. die dem Abstand zwischen den Positionen entspricht, an denen das Profil zuerst den Wert $I_{sprt\_dark}$ und zuerst den Wert $I_{sprt\_light}$ aufweist. Da das Grauwertprofil eine Gaußsche Funktion darstellt, gilt nach (22) und (1):

$$\frac{I_{sprt\_light}}{I_{surf}} = e^{-\frac{1}{2}(\frac{\delta_{light}}{\sigma})2} = 1 - \eta_0. \tag{23}$$

Aus (23) folgt:

$$\delta_{light} = \sqrt{- 2 * \ln(1 - \eta_0)} * \sigma. \tag{24}$$

**14**

Für die Hilfstrecke $l_0$ erhält man aus dem Grauwertprofil **(Fig. 3):**

$$l_0 = L_0 - \delta_{light}. \tag{25}$$

Aus (25), (24) und (16) folgt:

$$l_0 = (\sqrt{3} - \sqrt{-2 * \ln(1 - \eta_0)})*\sigma. \tag{26}$$

Mit $\eta_0$ aus (6) ergibt sich der Faktor:

$$(\sqrt{3} - \sqrt{-2*\ln(1 - \eta_0)}) \approx 1{,}0217 .$$

Da sich $l_0$ somit nur geringfügig von $\sigma$ unterscheidet, und als Länge der Teststrecke $L_0$ nur eine ganzzahlige Anzahl der Pixel verwendet wird, kann die Hilfsstrecke $l_0$ ohne einen Verallgemeinerungsverlust als Standardabweichung $\sigma$ des Grauwertprofils angenommen werden:

$$l_0 \cong \sigma . \tag{27}$$

Daraus folgt, dass die Teststrecke $L_0$ nach (16) und (27) als

$$L_0 = \sqrt{3} * l_0 \tag{28}$$

berechnet werden kann.

Darüber hinaus kann die Kantensuche gleich zwischen den zwei oben genannten Positionen ($I_{sprt\_dark}$, $I_{sprt\_light}$) stattfinden.

Damit kann die Länge der Teststrecke $L_0$, die kantenspezifische minimale Helligkeit $I_0$ und die kantenspezifische minimale Helligkeitssteigung $\Delta I_0$ dynamisch und lokal an der zu untersuchenden Stelle ermittelt werden.

Falls die Bedingung (19) nicht erfüllt ist, entspricht die aufgenommene Objekthelligkeit $I_{surf}$ nicht mehr der Realität. Deswegen soll die Objekthelligkeit $I_{surf}$ durch den Helligkeitswert $I_{lin}$ ersetzt werden, der die obere Grenze des Linearitätsbereichs der Kamera (z.B. 220 Graustufen) darstellt, und gleichzeitig noch die Intensitätsverteilung des zu untersuchenden Grauwertprofils als ein Gaußsches Profil nach (18) gewährleistet und damit eine adaptive Kantenerkennung erlaubt. Danach soll die neu bestimmte Objekthelligkeit nochmals mit der Hintergrundhelligkeit $I_{bgrd}$ verglichen werden. Wenn die Bedingung (18) immer noch gültig ist, wobei:

$$I_{surf} = I_{lin},$$

sollen die notwendigen Parameter nach dem oben beschriebenen Verfahren berechnet werden.

Falls aber festgestellt wurde, dass die Bedingung (18) nicht mehr gültig ist, soll die kantenspezifische minimale Helligkeitssteigung $\Delta I_0$ aus einem normierten Gaußschen Profil unter Hinzunahme der vorhandenen Hintergrundhelligkeit $I_{bgrd}$ berechnet werden:

$$\Delta I_0 = (I_{surf} - I_{bgrd})*\eta_0. \tag{29}$$

Unter Berücksichtigung der Hintergrundhelligkeit $I_{bgrd}$ und der kantenspezifischen minimalen Helligkeitssteigung $\Delta I_0$ aus (29) erhält man für die kantenspezifische minimale Helligkeit $I_0$, den unteren Helligkeitsschwellwert $I_{sprt\_dark}$ aus (20) und den oberen Helligkeitsschwellwert $I_{sprt\_light}$ aus (21):

$$I_0 = I_{bgrd} + \Delta I_0 = I_{bgrd} + (I_{surf} - I_{bgrd})*\eta_0; \tag{30}$$

$$I_{sprt\_dark} = I_0 = I_{bgrd} + (I_{surf} - I_{bgrd})^*\eta_0; \tag{31}$$

$$I_{sprt\_light} = I_{surf} - \Delta I_0 = I_{surf} - (I_{surf} - I_{bgrd})^*\eta_0; \tag{32}$$

In allen Fällen kann die Standardabweichung σ und damit die Teststrecke $L_0$ ohne einen Verallgemeinerungsverlust nach dem oben beschriebenen Verfahren ermittelt werden.

Dies gilt auch für die Erkennung einer Doppelkante. Dabei soll man jedoch auf folgendes achten. Da die Einzelkanten (Kante **8** oder Kante **9**) einer Doppelkante, z.B. Kante eines Holzbrettes mit Rinde (Zwischenzone) **7** (**Fig. 4),** den Hintergrund **1** und das Holz (Objekt) **3** nicht direkt von einander trennen, dürfen die Helligkeitswerte $I_{surf}$ und $I_{bgrd}$ (**Fig. 5, 6)** nicht mehr als von einander abhängige Werte betrachten werden. Deshalb sollen die zwei gesuchten Kanten **8** und **9** jeweils auf dem entsprechenden Übergangsbereich (Hintergrund-Zwischenzone **10** und Zwischenzone-Objekt **11**) (**Fig. 6)** getrennt erkannt werden. Dafür braucht man für jeden zu untersuchenden Übergangsbereich eine eigene kantenspezifische minimale Helligkeit $I_0$ und eine eigene kantenspezifische minimale Helligkeitssteigung $\Delta I_0$.

Dabei geht man davon aus, dass das oben beschriebene Verfahren zur Erkennung einer einfachen Kante als Kalibrierungsroutine für ein Verfahren zur Erkennung einer Doppelkante durchgeführt wenden kann. Bei einer solchen Kalibrierung bekommt man aus einem Kalibrierungstestbereich, auf dem eine typische einfache Kante vorhanden ist, und aus einem weiteren Bildbsreich, der immer und sicher nur den Hintergrund enthält, folgende Parameter:

- die generelle Hintergrundhelligkeit $I_{bgrd\_gen}$;
- den generellen Helligkeitstrennwert $I_{sprt}$;
- die Länge der Teststrecke $L_0$.

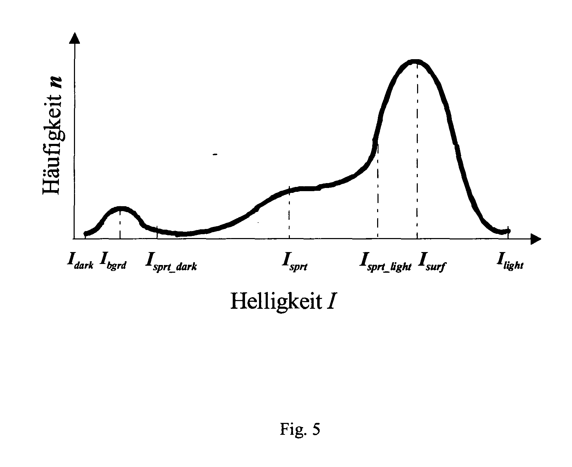

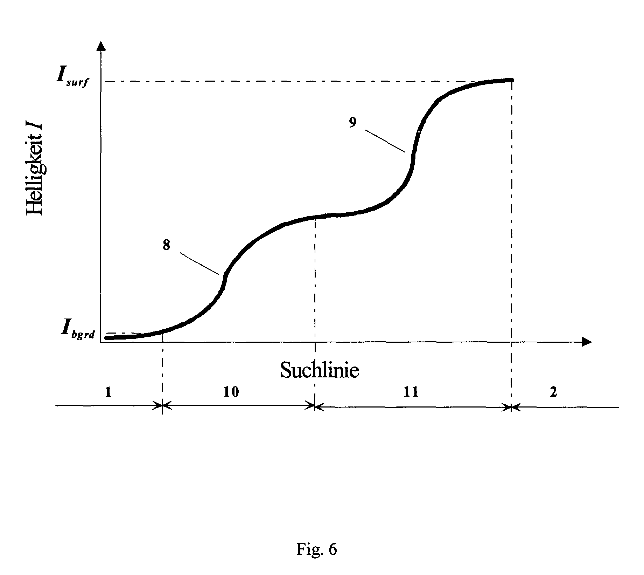

Da für die Kante **8** im Übergangsbereich Hintergrund-Zwischenzone **10** (**Fig. 6)** keine lokale Objekthelligkeit $I_{surf}$ ermittelt werden kann, sollen alle weiteren notwendigen Parameter in Abhängigkeit von der Hintergrundhelligkeit $I_{bgrd}$ (**Fig. 5)** berechnet werden.

Dabei kann eine virtuelle Objekthelligkeit $I_{surf\_virt}$ berechnet werden:

$$I_{surf\_virt} = I_{bgrd} / \xi_2, \tag{33}$$

die als Helligkeit betrachtet werden kann, die gemeinsam mit der Hintergrundhelligkeit $I_{bgrd}$ ein Grauwertprofil für die Kante **8** in diesem Übergangsbereich bildet.

Dann soll eine kantenspezifische minimale Helligkeit $I_0$, im Weiteren als kantenspezifische minimale Helligkeit $I_{0\_bgrd}$ bezeichnet, in Abhängigkeit von der virtuellen Objekthelligkeit $I_{surf\_virt}$ berechnet werden. Nach (13), (33) und (6) gilt:

$$I_{0\_bgrd} = \frac{I_{bgrd}}{\xi_1}. \tag{34}$$

Ebenfalls soll die kantenspezifische minimale Helligkeitssteigung $\Delta I_{0\_bgrd}$ definiert werden. Dabei ist die Hintergrundhelligkeit $I_{bgrd}$ für diese Kante bereits bekannt. Deswegen soll die kantenspezifische minimale Helligkeitssteigung $\Delta I_{0\_bgrd}$ analog zur kantenspezifischen minimalen Helligkeitssteigung $\Delta I_0$ für eine einfache Kante 3 für den Fall (18) definiert werden, jedoch in Abhängigkeit von der Objekthelligkeit $I_{surf\_virt}$. Aus (14) und (34) folgt:

$$\Delta I_{0\_bgrd} = I_{0\_bgrd} = \frac{I_{bgrd}}{\xi_1}. \tag{35}$$

Für die Kante **9** im Übergangsbereich Zwischenzone-Objekt **11** (**Fig. 6)** kann keine lokale Hintergrundhelligkeit $I_{bgrd}$ ermittelt werden. Deswegen soll man alle weiteren notwendigen Parameter nur in Abhängigkeit von der Objekthelligkeit $I_{surf}$ (**Fig. 5)** analog zur einfachen Kante **3** für den Fall (18) berechnen. Es könnte jedoch passieren, dass man auf dem Histogramm (**Fig. 5)** und auf dem Grauwertprofil (**Fig. 6)** in einen Bereich kommt, in dem bereits die Helligkeitswerte der Zwischenzone **7** dargestellt sind. Um das zu vermeiden und gleichzeitig die Bedingungen (18) und (19) noch zu gewährleisten, kann der Wendepunkt des Grauwertprofils $I_{turn}$ als kantenspezifische minimale Hel-

ligkeit $I_0$) für die Kante **9** im Übergangsbereich Zwischenzone-Objekt **11** angenommen werden. Diese kantenspezifische minimale Helligkeit wird im Weiteren als $I_{0\_surf}$ bezeichnet:

$$I_{0\_surf} = I_{turn} = I_{surf}*\xi_1. \tag{36}$$

In diesem Fall wird die Suche nach der Kante **9** nicht mehr in einem möglichen falschen Bereich angefangen, sondern erst dort, wo sich die gesuchte Kante sicher befinden kann.

Für die Erkennung dieser Kante soll auch die entsprechende kantenspezifische minimale Helligkeitssteigung $\Delta I_{0\_surf}$ definiert werden. Die Objekthelligkeit $I_{surf}$ ist dabei bereits bekannt. Deswegen soll die kantenspezifische minimale Helligkeitssteigung $\Delta I_{0\_surf}$ analog zur kantenspezifischen minimalen Helligkeitssteigung $\Delta I_0$ für eine einfache Kante **3** für den Fall (18) definiert werden. Aus (14) folgt:

$$\Delta I_{0\_surf} = I_{surf}*\eta_0. \tag{37}$$

Damit lässt sich eine adaptive Kantenerkennung sowohl für eine einfache als auch für eine komplexe Kante durchführen, die eine sichere, flexible und gleichzeitig explizite Erkennung der Kante gewährleistet.

Literatur

1. Patent DE 19902401 C2.
2. Patent DE 4131778 C2.
3. Patent EP 0750272 B1.
4. Patent EP 0807297 B1.
5. Patent DE 4435796 C1.
6. Digitale Bildverarbeitung / Bernd Jähne. - 4. Aufl. - Berlin, Hedelberg, etc.: Springer, 1997
7. Industrielle Bildverarbeitung / Christian Demant, Bernd Streicher-Abel, Peter Waszkewitz. - Berlin; Heidelberg: Springer, 1998.
8. Methoden der digitalen Bildsignalverarbeitung / Piero Zamperoni. - Braunschweig / Wiesbaden: Friedr. Vieweg & Sohn, 1989.
9. Technische Optik: Grundlagen und Anwendungen / Gottfried Schröder. - 7.Aufl. - Würzburg: Vogel, 1990 (Kamprath-Reihe), S. 88.
10. A Comparison of Algorithms for Sub-pixel Peak Detection / D. K. Naidu, R. B. Fisher. Department of Artifical Intelligence, University of Edinburgh, Scotland, U.K., DAI Research Paper No. 553, Oktober 17, 1991.

Bezugszeichenliste

| | |
|---|---|
| **1** | Hintergrund |
| **2** | Objekt |
| **3** | Kante zwischen dem Hintergrund und dem Objekt |
| **4** | Testbereich |
| **5** | Suchlinie |
| **6** | Übergangsbereich zwischen dem Hintergrund und dem Objekt (einfache Kante) |
| **7** | Zwischenzone (Rinde) |
| **8** | Kante zwischen dem Hintergrund und der Zwischenzone (Rinde) |
| **9** | Kante zwischen der Rinde und dem Objekt (Holz) |
| **10** | Übergangsbereich zwischen dem Hintergrund und der Zwischenzone (Rinde) (Doppelkante) |
| **11** | Übergangsbereich zwischen der Rinde und dem Objekt (Holz) (Doppelkante) |

**Patentansprüche**

1. Verfahren zur adaptiven Erkennung einer Kante 3, die auf einem mit einem Kamerasensor aufgenommenen Bild in einem **Testbereich 4** entlang einer Suchlinie **5** gesucht wird, **dadurch gekennzeichnet, dass** das Histogramm aus dem Testbereich 4 und das Grauwertprofil entlang der Suchlinie **5** als Gaußverteilungen behandelt und zusammen als Ausgangsdaten für die Kantenerkennung benutzt werden sollen, aus denen eine kantenspezifische minimale Helligkeit $I_0$ und eine kantenspezifische minimale Helligkeitssteigung $\Delta I_0$ sowie die Länge der Teststrecke $L_0$ adaptiv zu lokalen Helligkeitsbedingungen dynamisch ermittelt werden, mit deren Hilfe eine Kante **3** gesucht wird, wobei die Teststrecke $L_0$, auf der die lokale maximale Helligkeit $I_{max}$ und die lokale Helligkeitssteigung $\Delta I$ ermittelt und überprüft werden, entlang der Suchlinie **5** verschoben werden soll.

Desweiteren muss noch das Histogramm aus einem Bildbereich, der nur den Hintergrund immer und sicher darstellt, gebildet werden. Dabei geht man davon aus, dass unterschiedliche Objekte auf dem gleichen bzw. ähnlichen Hintergrund untersucht werden sollen.

Patentgemäß ist die Erkennung einer Kante folgendermaßen durchzuführen.

Zuerst soll aus einem Bereich, der sich auf dem Hintergrund und nur auf dem Hintergrund befindet, eine bildspezifische generelle Hintergrundhelligkeit $I_{bgrd\_gen}$ als am häufigsten aufgetreten Wert des Histogramms ermittelt werden, das aus diesem Bereich gewonnen wurde. Diese dient um einen Helligkeitstrennwert $I_{sprt}$ *(separator)* zu berechnen:

$$I_{sprt} = \frac{I_{bgrd\_gen}}{\eta_0},$$

wobei:

$\eta_0$ - der Helligkeitsfaktor, der eine allgemeine grundlegende Konstante für die Kantenerkennung darstellt:

$$\eta_0 = \frac{\xi_2}{\xi_1} = e^{-\frac{3}{2}};$$

$\xi_1$ - der Wendepunktkoeffizient, der die Intensität eines Strahles am Wendepunkt seiner Intensitätsverteilung bestimmt, der vom Zentrum (Maximum) dieser Verteilung um die Standardabweichung $\sigma$ entfernt ist:

$$\xi_1 = e^{-\frac{1}{2}};$$

$\xi_2$ - der Randpunktkoeffizient, der die Intensität eines Strahles an seinem Rand bestimmt, der vom Zentrum (Maximum) dieser Verteilung um die zweifache Standardabweichung $2 * \sigma$ entfernt ist:

$$\xi_2 = e^{-2}.$$

Dann findet man aus dem Histogramm des zu untersuchenden Bereiches **4** die Objekthelligkeit $I_{surf}$ *(surface)* und die Hintergrundhelligkeit $I_{bgrd}$ *(background)*. Dabei geht man davon aus, dass das Objekt **2** beispielsweise immer heller als der Hintergrund **1** ist. Ansonsten sollen die Rollen des Objekts und des Hintergrunds vertauscht werden. Für die Oberflächenhelligkeit $I_{surf}$ soll der am häufigsten vorkommende Wert im Bereich von [$I_{sprt}$ - $I_{light}$] und für die Hintergrundhelligkeit $I_{bgrd}$ der am häufigsten vorkommende Wert im Bereich von [$I_{dark}$ - $I_{sprt}$] des Histogramms genommen werden, wobei:

$I_{dark}$ - die minimale Helligkeit aus dem Histogramm des zu untersuchenden Bereiches **4,** die als erste eine Häufigkeit ungleich null aufweist;

$I_{light}$ - die maximale Helligkeit aus dem Histogramm des zu untersuchenden Bereiches **4,** die als letzte eine Häufigkeit ungleich null aufweist.

Aus dem Grauwertprofil kann dann mit Hilfe der bekannten konventionellen Rechenmethoden, z.B. die Methode der kleinsten Quadraten, die Standardabweichung σ ermittelt werden.

Die Standardabweichung σ soll dann für die Berechnung der Länge der Teststrecke $L_0$ benutzt werden:

$$L_0 = \sqrt{3} * \sigma.$$

Wenn auf der Suchlinie innerhalb der Teststrecke $L_0$ gleichzeitig die folgenden beiden Bedingungen erfüllt sind:

$$I_{max} \geq I_0;$$

$$\Delta I \geq \Delta I_0,$$

wobei:

$\Delta I$ -    die lokale Helligkeitssteigung innerhalb der Teststrecke $L_0$

$$\Delta I = I_{max} - I_{min};$$

$I_{max}$ -    die lokale maximale Helligkeit innerhalb der Teststrecke $L_0$;
$I_{min}$ -    die lokale minimale Helligkeit innerhalb der Teststrecke $L_0$,

dann ist eine Kante 3 im Testbereich 4 zwischen den zwei folgenden Stellen vorhanden. Die erste Stelle entspricht dem Endpunkt der Teststrecke $L_0$, wenn beide oben genannten Bedingungen zum ersten Mal erfüllt sind. Die zweite Stelle entspricht dem Startpunkt der Teststrecke $L_0$, wenn beide oben genannten Bedingungen zum letzten Mal erfüllt sind.

Die kantenspezifische minimale Helligkeit $I_0$ und die kantenspezifische minimale Helligkeitssteigung $\Delta I_0$ sollen je nach absoluter Größe der Hintergrundhelligkeit $I_{bgrd}$, der Objekthelligkeit $I_{surf}$ sowie deren Verhältnis berechnet werden. Man unterscheidet dabei folgende Fälle:

- Falls gilt:

$$I_{bgrd} \leq I_{surf} * \xi_2;$$

$$I_{surf} \leq I_{lin},$$

wobei: $I_{lin}$ - die obere Grenze des Linearitätsbereiches der Kamera,
sollen die gesuchten Parameter folgendermaßen berechnet werden:

$$I_0 = I_{surf} * \eta_0;$$

$$\Delta I_0 = I_{surf} * \eta_0;$$

- Falls gilt:

$$I_{bgrd} \leq I_{surf} * \xi_2;$$

aber

$$I_{surf} > I_{lin},$$

soll die Objekthelligkeit $I_{surf}$ durch die Helligkeit $I_{lin}$ ersetzt und danach nochmals mit der Hintergrundhelligkeit $I_{bgrd}$ verglichen werden. Wenn die Bedingung

$$I_{bgrd} \leq I_{surf}{}^{*}\xi_2$$

noch gültig ist, wobei:

$$I_{surf} = I_{lin},$$

sollen die gesuchten Parameter nach dem oben beschriebenen Verfahren berechnet werden.

- Falls gilt:

$$I_{bgrd} > I_{surf} * \xi_2,$$

sollen die gesuchten Parameter folgendermaßen berechnet werden:

$$I_0 = I_{bgrd} + (I_{surf} - I_{bgrd})^{*}\eta_0;$$

$$\Delta I_0 = (I_{surf} - I_{bgrd})^{*}\eta_0,$$

wobei die Objekthelligkeit $I_{surf}$ durch den Helligkeitswert $I_{lin}$ im Falle der Überbelichtung

$$I_{surf} > I_{lin}$$

ersetzt werden soll.

Die weitere genauere Suche nach der Kante **3** kann nach unterschiedlichen bekannten Verfahren, u.a. mit Sub-pixel-Genauigkeit durchgeführt werden.

2. Verfahren nach Anspruch 1, **dadurch gekennzeichnet, dass** die generelle Hintergrundhelligkeit $I_{bgrd\_gen}$ sowohl für weitere zu untersuchende Bereiche im gesamten aktuellen Bild als auch für weitere Bilder unter gleichen Aufnahmenbedingungen als lokale Hintergrundhelligkeit $I_{bgrd}$ benutzt werden kann.

3. Verfahren nach Anspruch 1 und 2, **dadurch gekennzeichnet, dass** der Helligkeitstrennwert $I_{sprt}$ folgendermaßen berechnen werden kann:

$$I_{sprt} = I_{bgrd\_gen} + 2^{*}\sigma_{I_{bgrd\_gen}},$$

wobei:

$\sigma_{I_{bgrd\_gen}}$ - die Standardabweichung des Histogramms, das aus dem Hintergrundbereich gewonnen ist, auf dem die generelle Hintergrundhelligkeit $I_{bgrd\_gen}$ ermittelt werden soll.

4. Verfahren nach Anspruch 1, **dadurch gekennzeichnet, dass** in dem Fall, in dem die Kante **3** vom gleichen bzw. ähnlichen Objekt auf unterschiedlichen Hintergründen gesucht wird, zuerst aus einem Bereich, der sich auf dem Objekt und nur auf dem Objekt befindet, eine bildspezifische generelle Objekthelligkeit $I_{surf\_gen}$ ermittelt werden soll, die sowohl für weitere zu untersuchende Bereiche im gesamten aktuellen Bild als auch für weitere Bilder unter gleichen Aufnahmenbedingungen und bei ähnlichen Objekten als lokale Objekthelligkeit $I_{surf}$ benutzt werden kann.

**5.** Verfahren nach Anspruch 4, **dadurch gekennzeichnet, dass** die bildspezifische generelle Objekthelligkeit $I_{surf\_gen}$ dazu dienen kann, einen Helligkeitstrennwert $I_{sprt}$ folgendermaßen zu berechnen:

$$I_{sprt} = I_{surf\_gen} * \xi_1.$$

**6.** Verfahren nach Anspruch 4 und 5, **dadurch gekennzeichnet, dass** die bildspezifische generelle Objekthelligkeit $I_{surf\_gen}$ dazu dienen kann, einen Helligkeitstrennwert $I_{sprt}$ folgendermaßen zu berechnen:

$$I_{sprt} = I_{surf\_gen} - 2 * \sigma_{I_{surf\_gen}},$$

wobei:

$\sigma_{I_{surf\_gen}}$ -  die Standardabweichung des Histogramms, das aus dem Objektbereich gewonnen ist, auf dem die generelle Objekthelligkeit $I_{surf\_gen}$ ermittelt werden soll.

**7.** Verfahren nach Anspruch 1, **dadurch gekennzeichnet, dass** die Werte $I_{surf}$ und $I_{bgrd}$ benutzt werden, um u.a. den unteren Helligkeitsschwellwert $I_{sprt\_dark}$ und den oberen Helligkeitsschwellwert $I_{sprt\_light}$ zu berechnen, die dazu dienen, den mittleren Bereich des Grauwertprofils von seinen Randbereichen abzutrennen, die aus dem Hintergrund **1** bzw. dem Objekt 2 stammen und deswegen mit möglichen Störungen belastet sein können, damit die Standardabweichung $\sigma$ des Grauwertprofils mit wesentlich höherer Genauigkeit und Sicherheit auf dem abgetrennten Bereich der Kurve mit Hilfe der bekannten konventionellen Rechenmethoden, z.B. die Methode der kleinsten Quadraten, ermittelt werden kann.

Der untere Helligkeitsschwellwert $I_{sprt\_dark}$ und der obere Helligkeitsschwellwert $I_{sprt\_light}$ sollen erfindungsgemäß je nach absoluter Größe der Hintergrundhelligkeit $I_{bgrd}$, der Objekthelligkeit $I_{surf}$ sowie deren Verhältnis berechnet werden. Man unterscheidet dabei folgende Fälle:

- Falls gilt:

$$I_{bgrd} \leq I_{surf} * \xi_2;$$

$$I_{surf} \leq I_{lin},$$

wobei: $I_{lin}$ - die obere Grenze des Linearitätsbereiches der Kamera, sollen die gesuchten Parameter folgendermaßen berechnet werden:

$$I_{sprt\_dark} = I_{surf} * \eta_0;$$

$$I_{sprt\_light} = I_{surf} * (1 - \eta_0).$$

- Falls gilt:

$$I_{bgrd} \leq I_{surf} * \xi_2;$$

aber

$$I_{surf} > I_{lin},$$

soll die Objekthelligkeit $I_{surf}$ durch die Helligkeit $I_{lin}$ ersetzt und danach nochmals mit der Hintergrundhelligkeit $I_{bgrd}$ verglichen werden. Wenn die Bedingung

$$I_{bgrd} \le I_{surf} {}^* \xi_2$$

noch gültig ist, wobei:

$$I_{surf} = I_{lin},$$

sollen die gesuchten Parameter nach dem oben beschriebenen Verfahren berechnet werden.

- Falls gilt:

$$I_{bgrd} > I_{surf} {}^* \xi_2,$$

sollen die Parameter folgendermaßen berechnet werden:

$$I_{sprt\_dark} = I_{bgrd} + (I_{surf} - I_{bgrd}) {}^* \eta_0;$$

$$I_{sprt\_light} = I_{surf} - (I_{surf} - I_{bgrd}) {}^* \eta_0,$$

wobei die Objekthelligkeit $I_{surf}$ durch den Helligkeitswert $I_{lin}$ im Falle der Überbelichtung

$$I_{surf} > I_{lin}$$

ersetzt werden soll.

**8.** Verfahren nach Anspruch 1 und 7, **dadurch gekennzeichnet, dass** die Hilfsteststrecke $I_0$, die man als Abstand zwischen den Positionen auf dem Grauwertprofil ermittelt, an denen das Profil zuerst den Wert $I_{sprt\_dark}$ und zuerst den Wert $I_{sprt\_light}$ aufweist, als Standardabweichung $\sigma$ des Gaußförmigen Grauwertprofils angenommen werden kann. Damit kann die Teststrecke $L_0$ als

$$L_0 = \sqrt{3} * I_0$$

ermittelt und die Kantensuche direkt zwischen den zwei oben genannten Positionen durchgeführt werden.

**9.** Verfahren nach Anspruch 1, 7 und 8, **dadurch gekennzeichnet, dass** die Länge der Teststrecke $L_0$ auf einem speziellen Kalibrierungstestbereich, der eine typische Kante enthält, ermittelt und sowohl für weitere zu untersuchende Bereiche im gesamten aktuellen Bild als auch für weitere Bilder unter gleichen Aufnahmenbedingungen verwendet werden kann.

**10.** Verfahren nach Anspruch 1 und 7 bis 9, **dadurch gekennzeichnet, dass** die Länge der Teststrecke $L_0 \ge 3$ Pixel sein soll. Ansonsten soll die Länge $L_0 = 3$ festgelegt werden.

**11.** Verfahren nach Anspruch 1, **dadurch gekennzeichnet, dass** die Erkennung einer Doppelkante, die aus zwei Übergangsbereichen *8* und *9,* zwischen dem Hintergrund *1* und der Zwischenzone *7* sowie zwischen der Zwischenzone *7* und dem Objekt *2* besteht, wobei jeder Übergangsbereich eine eigene Kante besitzt, und immer unterschiedliche Objekte auf dem gleichen bzw. ähnlichen Hintergrund untersucht werden, folgendermaßen durchgeführt werden soll.
Das oben beschriebene Verfahren zur Erkennung einer einfachen Kante *3* soll zuerst als Kalibrierungsroutine durchgeführt werden. Bei einer solchen Kalibrierung bekommt man aus einem Kalibrierungstestbereich, auf dem eine typische einfache Kante vorhanden ist, und aus einem weiteren Bildbereich, der immer und sicher nur den Hintergrund enthält, folgende Parameter:

- die generelle Hintergrundhelligkeit $I_{bgrd\_gen}$;

- den generellen Helligkeitstrennwert $I_{sprt}$ ;
- die Länge der Teststrecke $L_0$.

Danach wird die Doppelkante selbst untersucht, wobei ein Grauwertprofil und ein Histogramm an jeder zu untersuchenden Stelle dieser Kante gewonnen werden sollen.

Mit dem generellen Helligkeitstrennwert $I_{sprt}$ findet man im Bereich von $[I_{dark} - I_{sprt}]$ des Histogramms die lokale Hintergrundhelligkeit $I_{bgrd}$ . Diese wird für die Berechnung der kantenspezifischen Parameter - die kantenspezifische minimale Helligkeit $I_{0\_bgrd}$ und die kantenspezifische minimale Helligkeitssteigung $\Delta I_{0\_bgrd}$ - benutzt, um die Suche nach einer Kante *8* zwischen dem Hintergrund *1* und der Zwischenzone *7* durchzuführen. Analog dazu findet man im Bereich von $[I_{sprt} - I_{light}]$ des Histogramms die lokale Objekthelligkeit $I_{surf}$ und nutzt diese für die Berechnung der kantenspezifischen Parameter - die kantenspezifische minimalen Helligkeit $I_{0\_surf}$ und die kantenspezifische minimale Helligkeitssteigung $\Delta I_{0\_surf}$ - um die Suche nach einer Kante *9* zwischen der Zwischenzone *7* und dem Objekt *2* durchzuführen.

Diese Parameter werden folgendermaßen definiert:

$$I_{0\_bgrd} = \frac{I_{bgrd}}{\xi_1};$$

$$\Delta I_{0\_bgrd} = \frac{I_{bgrd}}{\xi_1};$$

$$I_{0\_surf} = I_{surf}{}^{*}\xi_1;$$

$$\Delta I_{0\_surf} = I_{surf}{}^{*}\eta_0.$$

Falls unter Umständen festgestellt wurde, dass:

$$I_{bgrd} < I_{bgrd\_gen},$$

soll die lokale Hintergrundhelligkeit $I_{bgrd}$ durch die generelle Hintergrundhelligkeit $I_{bgrd\_gen}$ ersetzt werden:

$$I_{bgrd} = I_{bgrd\_gen}.$$

Das Grauwertprofil soll dann mit der Teststrecke $L_0$ jeweils nach jeder der beiden zu suchenden Kanten abgesucht werden.

**12.** Verfahren nach Anspruch 11, **dadurch gekennzeichnet, dass** die Kante *9* im Übergangsbereich zwischen der Zwischenzone *7* und dem Objekt *2* als erste gesucht werden soll. Sobald diese gefunden wird, kann die Suche nach der Kante *8* im Übergangsbereich zwischen dem Hintergrund *1* und der Zwischenzone *7* stattfinden.

Die zweite Kantensuche soll vom Anfang des Testbereiches bis zur Position durchgeführt werden, an der sich die bereits ermittelte Kante *9* zwischen der Zwischenzone *7* und dem Objekt *2* befindet.

Falls keine Zwischenzone-Objekt - Kante gefunden wurde, soll eine Kante innerhalb des ganzen Testbereiches gesucht werden. In diesem Fall kann dann nur eine Kante (zwischen dem Hintergrund *1* und dem Objekt *2*) bzw. gar keine Kante in dem zu untersuchenden Testbereich gefunden werden.

**13.** Verfahren nach Anspruch 1 und 12, **dadurch gekennzeichnet, dass** für die Erkennung einer Doppelkante, die aus zwei Übergangsbereichen *8* und *9,* zwischen dem Hintergrund *1* und der Zwischenzone 7, sowie zwischen der Zwischenzone *7* und dem Objekt *2,* besteht, wobei jeder Übergangsbereich eine eigene Kante besitzt, und immer das gleiche bzw. ähnliche Objekt auf verschiedenen Hintergründen untersucht wird, eine Kalibrierung aus einem Kalibrierungstestbereich, auf dem eine typische einfache Kante vorhanden ist, und aus einem weiteren Bildbereich, der immer und sicher nur das Objekt enthält, durchgeführt werden soll und dabei folgende Parameter ermittelt werden sollen:

- die generelle Objekthelligkeit $I_{surf\_gen}$;

- den generellen Helligkeitstrennwert $I_{sprt}$;

- die Länge der Teststrecke $L_0$.

14. Verfahren nach Anspruch 11 bis 13, **dadurch gekennzeichnet, dass** im Testbereich *4* der Anteil des Hintergrundes *1* und des Objektes *2* groß genug gegenüber dem Anteil des dazwischen liegenden Bereiches sein soll, damit die Objekthelligkeit $I_{surf}$ und die Hintergrundhelligkeit $I_{bgrd}$ aus dem Histogramm eindeutig ermittelt werden können.

15. Verfahren nach Anspruch 11, **dadurch gekennzeichnet, dass** die einzelnen Kanten einer komplexen Mehrfachkante, die mehr als zwei einfache Kanten enthalten kann, folgendermaßen erkannt werden sollen.
Die hellste Kante wird zuerst nach dem oben beschriebenen Verfahren zur Erkennung einer Doppelkante gesucht. Die erste gefundene Kante weist dann eine Helligkeit auf, die als lokale Objekthelligkeit $I_{surf\_loc}$ weiter für die Suche nach der nächst dunkleren Kante verwendet werden kann. Mit dieser Kettensuche werden alle weitere Kanten aufgespürt. Allerdings sollen alle Suchschritte mit der Hintergrundhelligkeit $I_{bgrd}$ abgestimmt werden, damit das Kantenerkennungsverfahren nicht über den Hintergrund hinaus läuft.

16. Verfahren nach Anspruch 15, **dadurch gekennzeichnet, dass** die einzelnen Kanten einer komplexen Mehrfachkante, die mehr als zwei einfache Kanten enthalten kann, folgendermaßen erkannt werden sollen.
Die dunkelste Kante wird zuerst nach dem oben beschriebenen Verfahren zur Erkennung einer Doppelkante gesucht. Die erste gefundene Kante weist dann eine Helligkeit auf, die als lokale Hintergrundhelligkeit $I_{bgrd\_loc}$ weiter für die Suche nach der nächst helleren Kante verwendet werden kann. Mit dieser Kettensuche werden alle weitere Kanten aufgespürt. Allerdings sollen alle Suchschritte mit der Objekthelligkeit $I_{surf}$ abgestimmt werden, damit das Kantenerkennungsverfahren nicht über den Objekt hinaus läuft.

17. Verfahren nach Anspruch 1 bis 16, **dadurch gekennzeichnet, dass** die Suchlinie 6 quer zur zu untersuchenden Kante *3,* jedoch innerhalb des Testbereiches *4* liegen soll, wobei das Grauwertprofil sowohl aus einer einzelnen Pixelreihe als auch als Mittelwertkurve aus mehreren, z.B. drei, parallel zur Suchlinie *6* liegenden benachbarten Pixelreihen gebildet werden kann.

18. Verfahren nach Anspruch 1 bis 17, **dadurch gekennzeichnet, dass** nur jede einzelne zu untersuchende Kurve aber nicht das Bild selbst geglättet werden soll.

19. Verfahren nach Anspruch 1 bis 18, **dadurch gekennzeichnet, dass** eine morphologische Filterung für die Glättung der zu untersuchenden Kurven verwendet werden soll.

Fig. 1

EP 1 489 557 A2

Fig. 2

26

**Fig. 3**

Fig. 4

Fig. 5

Fig. 6